# EUROPEAN PATENT SPECIFICATION

(11) **EP 3 331 061 B1**
(45) Date of publication and mention of the grant of the patent: **11.09.2019**
(21) Application number: 16201662.0
(22) Date of filing: 01.12.2016
(51) Int. Cl.: H01M 2/18, H01M 2/30, H01M 4/131, H01M 4/133, H01M 4/134, H01M 4/66, H01M 4/78, H01M 10/0525, H01M 10/058, H01M 2/02, H01M 4/02

(54) **SPHERICAL BATTERY AND PRODUCTION METHOD**
KUGELFÖRMIGE BATTERIE UND HERSTELLUNGSVERFAHREN
BATTERIE SPHÉRIQUE ET PROCÉDÉ DE PRODUCTION

(43) Date of publication of application: 06.06.2018
(73) Proprietor: Vestel Elektronik Sanayi ve Ticaret A.S., 45030 Manisa (TR)
(72) Inventor: ÖCAL, Ömür, 45030 Manisa (TR); MEMISOGLU, Görkem, 45030 Manisa (TR); ABBAK, Mehmet, 45030 Manisa (TR)
(74) Representative: Ascherl, Andreas

(56) References cited:
- JP-A- 2003 046 077
- KR-A- 20150 062 053
- US-A1- 2016 218 341

## Description

The present invention refers according to claim 1 to a battery having spherical components, to a cascade battery system at least comprising two of the before mentioned batteries according to claim 9 and a method according to claim 13 for the production of such a battery.

### Background of the Invention

Document US2014356670A1 discloses a battery. One of the main disadvantage of the prior art is that such batteries cannot be compatible for all kinds of products, according to industrial designs. There are two parts in the known battery system, one half forms an anode and the other half forms a cathode. Furthermore, there are containers, clamps or lock mechanisms, holders and outlet channels, thus the known battery system is complex and hard to integrate into electric devices.

Document KR20150062053A1 discloses an electrode assembly in which a first electrode collector layer, a first electrolyte layer, a separation film layer, a second electrolyte layer, a second electrode active material layer, and a second electrode collector layer are sequentially stacked on a spherical first electrode active material layer, and the electrode assembly comprising: first and second groove parts which pass through the second electrode collector layer, the second electrode active material layer, the second electrode layer, the separation film layer, the first electrolyte layer, and the first electrode collector layer; and a terminal disposed in the first groove part, and exposed to the outside of the second electrode collector layer.

Document JP2003046077A discloses a semiconductor device which is configured, by making the spherical semiconductor device into shell structure and forming an electrochemical element as a power source in the core portion of that spherical semiconductor device. In such a semiconductor device, for example, the spherical semiconductor device is composed of a polycrystalline silicon layer, a semiconductor integrated circuit formed thereon, a protective layer and a thick silicon oxide film or the like and the electrochemical element is composed of a negative pole composed of silicon-lithium alloy, an electrolytic layer composed of a compound composed mainly of lithium nitride and a positive pole with a sulfur compound (Sx) as an active material or spherical semiconductor device is composed of a thin silicon oxide film, a polycrystalline silicon layer formed thereon, a semiconductor integrated circuit, a protective layer and a thick silicon oxide film or the like and the electrochemical element is composed of a negative pole composed of the deposited film of lithium, an electrolytic layer composed of solid-state polymer electrolyte and a positive pole composed mainly of titanium oxide.

Document US2016218341A1 discloses a rechargeable lithium battery which includes a lithium anode, a cathode, and a separator interposed between the lithium anode and the cathode. The separator includes a porous polymer soaked with a liquid electrolyte. The lithium battery further includes an artificial solid electrolyte interphase membrane interposed between the lithium anode and the separator. The artificial solid electrolyte interphase membrane may be a composite of a carbonaceous material, a high shear modulus conducting polymer, and a conductive additive.

In the literature there are cylindrical-type and flat-type batteries. However, they cannot be compatible for all kinds of products, according to industrial designs. In addition to this, at the moment there is no suitable battery mold in spherical designs which can be applied to speakers, space-craft or satellite, etc.

### Object of the Invention

It is therefore an object of the present invention to provide a battery which can be used in a beneficial manner, in particular due to reduced complexity, in electronic devices, like consumer electric device, in particular speaker, or space craft devices, in particular satellites.

### Description of the Invention

The before mentioned object is solved by a battery according to claim 1. The inventive battery for storing electric energy comprises at least a spherical core comprising a first material, a spherical separator surrounding the spherical core and a shell covering the spherical separator. The shell comprises a second material different from the first material. Furthermore, at least one first contact terminal extends from the spherical core through the separator and the shell. The first contact terminal is at least partially shielded in the section between the separator and the shell and extend from the spherical core or a coating on that core through the separator and the shell to the outside respectively outer surface of the shell or a packaging material surrounding the shell. At least one second contact terminal is arranged or formed at the outer surface of the shell or by the outside of the shell. Thus, there are at least two parts in the battery system: core is anode and cortex respectively shell is cathode, additionally there can be one or multiple separator between them and/or the whole system can be in electrolyte in the package. The inventive battery is to be considered as spherical battery. An electrical contact can be preferably taken from the spherical battery wherever necessary.

This solution is beneficial since it provides a battery mold in spherical designs which is compatibility for all kinds of products, according to industrial designs. It can be in particularly applied to many different electronic devices like speakers, space-craft or satellite, electric vehicles on automotive fields, consumer electronics, robot hoover, toys, biomedical electronics, etc. Furthermore, it is efficient and also a simple structure.

For mass production, spherical batteries are more useful, thanks to the supporting of the battery's easy and position-independent electrical contact.

Disclosed herein is providing electrical contacts from any arbitrary location at the core or surface of the battery.

Further preferred embodiments are described in the following specification parts or by the depending claims.

According to a preferred embodiment the shell forms an inner surface that represents a spherical shape and/or forms an outer surface that represents at least sectional and preferably mainly and highly preferably fully a spherical shape. The spherical shell can be assembled by multiple in particular two halves or can be produced in an additive manufacturing process. This solution is beneficial since the battery can be used due to its outer shape in multiple devices, in particular in devices which are subjected to high pressure. Furthermore, with respect to volume a spherical shape is also highly beneficial since it provides the smallest volume for a defined amount of material.

An electrolyte is provided according to a further preferred embodiment of the present invention on one side or on both sides of the separator, in particular between the separator and the core and/or between the separator and the shell. The separator preferably comprises a polymer material or consist of a polymer material. The separator is preferably impervious for the electrolyte.

The surface of the core is according to the present invention coated with a third material different from the first material and/or from the second material, in particular for forming an anode layer. This is beneficial since due to the material of the core a high efficient composition can be formed by coating the core with a further beneficial anode material. The third material comprises or consist of a material selected from the group: Graphite, CNT carbon nano tubes), TiO₂, Si, NiSi, Li_{4,4}Si, Li_{4,4}Sn, Li_{4,4}Pb, Li₃As, Li₃Sb, LiAl, LiC₆ and/or Li, etc. Thus, the efficiency of the battery can be increased due to the selected material composition. It is also possible to change parameters like the thickness of the coating and/or the diameter of the core and the surface properties of the core and/or of the coating.

The inner surface of the shell and/or the outer surface of the shell is according to a preferred embodiment of the present invention coated with a fourth material different from the first material and/or from the second material for forming a cathode layer. This embodiment is beneficial since due to the material of the shell a high efficient composition can be formed by coating the shell with a further beneficial cathode material. Generally, a cathode layer or cathode coating has more effect on the voltage level of the battery. In the present battery system, there can be an optimum of cathode material used (thanks to the core anode). The fourth material preferably comprises or consist of a material selected from the group: LiCoO₂, LiMnO₂ and/or LiFePO₄. etc. Thus, a further parameter that can be varied is the inner and/or outer diameter and/or volume of the shell and/or cathode coating in dependency of the volume and/or diameter of the core and/or inner or outer diameter or thickness of the anode coating.

It has to be understood that the first material is copper and the second material is aluminum.

The first contact terminal is according to a further preferred embodiment of the present invention at least sectional rigid and forms a holding element for positioning the core in the center of shell. It is alternatively or additionally possible that the core is mechanically coupled with the separator. The separator is highly preferably mechanically coupled with the shell. Mechanically coupled has to be understood as setting up a fix relative position between individual components, like separator and core or separator and shell.

The present invention further refers to a cascade battery system or a parallel battery system, at least comprising multiple batteries according to claims 1 to 8.

Said batteries are interconnected in the cascade battery system in such a manner that one first terminal of a first battery is connected with a second terminal of a second battery. In a parallel system the first contact terminals of a first battery and of a second battery are connected and the second contact terminals of the first battery and of the second battery are connected. Each battery has at least one first terminal and one second terminal in both cases, wherein the second terminal can be formed by the outer surface of the shell. The present invention also refers to electric devices or space craft devices, comprising at least one battery according to claims 1 to 9. This solution is beneficial since the battery of the present invention can be used in many areas that need/work with battery, such as: toys, robot vacuum cleaner (robot hoover), drones, electric vehicles and any other consumer electronics.

According to a further preferred embodiment of the present invention a supporting structure is part of the electric device or space craft device for holding the battery or cascade battery system or parallel battery system, wherein the supporting structure forms one or more contacting means for setting up point contacts, line contact/s or area contact with each battery. Thus, one battery or multiple batteries can be rotated while contacting the supporting structure at least partially in preferably at least any direction.

The present invention further refers to a method for producing a battery according to any of claims 1 to 9. This method comprises the steps of providing a spherical copper core. Coating said spherical copper is a further beneficial step. Hereby, the core is coated with a further material selected from the group of graphite, CNT (carbon nano tubes), TiO₂, Si, NiSi, Li_{4,4}Si, Li_{4,4}Sn, Li_{4,4}Pb, Li₃As, Li₃Sb, LiAl, LiC₆ and/or Li. Furthermore, a step of forming a separator around the coated core is executed. Further a step of filling the space between the separator and the coated core with a liquid electrolyte material is executed. In a further step a spherical aluminium shell is formed or assembled around the separator. It is alternative possible that a first part of the shell is produced first or provided first and the separator and core are arranged therein afterwards. Said shell is coated with a material selected form the group of LiCoO₂, LiMnO₂ and/or LiFePO₄, etc. Thus, it is possible to produce a new battery or battery system in spherical mold. The designed battery according to the present invention therefore comprises at least a spherical copper anode with a further material selected from the group of graphite, CNT (carbon nano tubes), TiO₂, Si, NiSi, Li_{4,4}Si, Li_{4,4}Sn, Li_{4,4}Pb, Li₃As, Li₃Sb, LiAl, LiC₆ and/or Li coated thereon, a separator, a spherical aluminum cathode and packaging materials around the spherical shell respectively cathode.

Thus, further or alternative steps can be:
Forming a packaging around the coated shell, wherein the packaging is preferably sectional and highly preferably fully spherical shaped.
Forming a second contact terminal while forming the shell or after forming the shell and before coating the shell or while coating the shell or after coating the shell.
Forming a first contact terminal while forming the core or after forming the core and before coating the core or while coating the core or after coating the core and before forming the separator or while forming the separator. Wherein the shell is formed in such a manner that the first contact terminal is not harmed. The first contact terminal is preferably shielded, in particular in the section between the separator and the surface of the coated shell or the packaging.

Further benefits, goals and features of the present invention will be described by the following specification of the attached figures, in which exemplarily components of the invention are illustrated. Components of the systems and methods according to the inventions, which match at least essentially with respect to their function can be marked with the same reference sign, wherein such components do not have to be marked or described in all figures.

In the following the invention is just exemplarily described with respect to the attached figures.

### Brief Description of the Drawings

- Fig. 1a: shows a schematic illustration of a battery according to the present invention;
- Fig. 1b: shows schematically a charging status and a discharging status of the present invention;
- Fig. 1c: shows a cascaded arrangement of two spherical batteries; and
- Fig. 2a: shows schematically steps of a production process for the production of batteries according to the present invention; and
- Fig. 2b: schematically the integration of the inventive battery in a device respectively system.

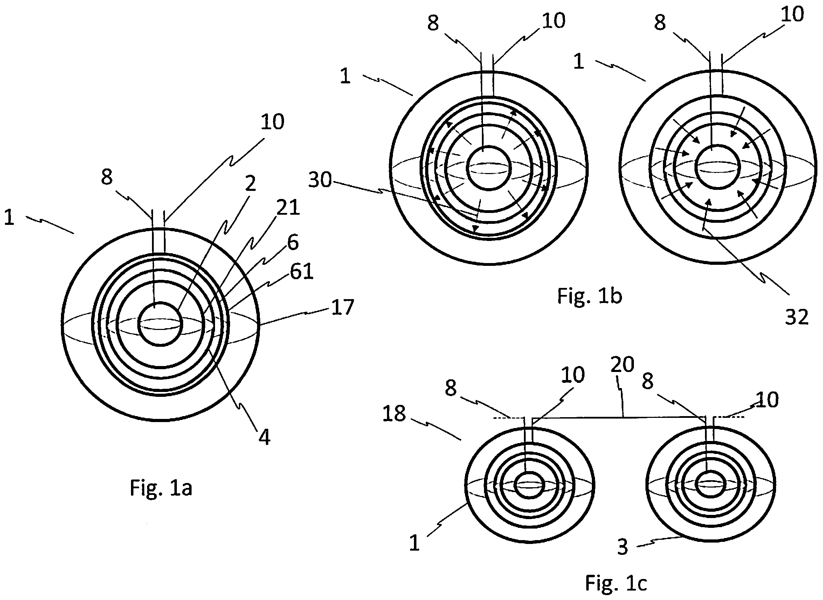

A spherical battery 1 according to the present invention is shown in fig. 1a. This battery 1 comprises a copper core 2. Said core 2 is preferably coated with an anode material. The resulting layer is indicated by reference number 21. Furthermore, a separator 4 is provided for separating a shell 6 having at least one cathode layer 61 from the core 2 respectively the anode layer. A liquid or solid material, in particular an electrolyte, is preferably fit between separator 4 and the anode layer 2. Separator 4 is surrounded by an aluminium shell 6. Cathode layer 61 is preferably surrounded by a packaging layer or isolation layer or contacting layer or handling layer 17. The first contact terminal 8 can be considered as positive pole and the second contact terminal 10 can be considered as negative pole. The first contact terminal 8 extends from the inside of the spherical battery 1 to the outside of spherical battery 1.

The first contact terminal 8 is partially shielded respectively electrically shielded, in particularly in the area between the separator 4 and the surface of the cathode layer 61. It is preferably attached to the core and/or to the anode layer coated or arranged on the core.

The second terminal 10 is part of the outer surface of shell 6 and/or part of the surface of cathode layer 61 coated or arranged on shell 6.

Fig. 1b shows a smart spherical battery 1 structure with electrode pins respectively contact terminals 8, 10 and Li+ flow on Charge and Discharge.

The discharging state is schematically shown in the left figure and indicated by arrows 30, which are indicating an energy flow, in particular Li+ flow, from anode layer 21 and/or core 2 through separator 4 to shell 6 and/or cathode layer 61.

The charging state is schematically shown in the right figure and indicated by arrows 32, which are indicating an energy flow, in particular Li+ flow, from cathode layer 61 and/or shell 6 through separator 4 to core 2 and/or anode layer 21.

Fig. 1c shows a cascade structure 18 of the smart spherical batteries 1, 3. It can be seen from this illustration that the second terminal 10 of battery 1 is coupled by means of an electric connection 20 with the first terminal 8 of the second battery 3.

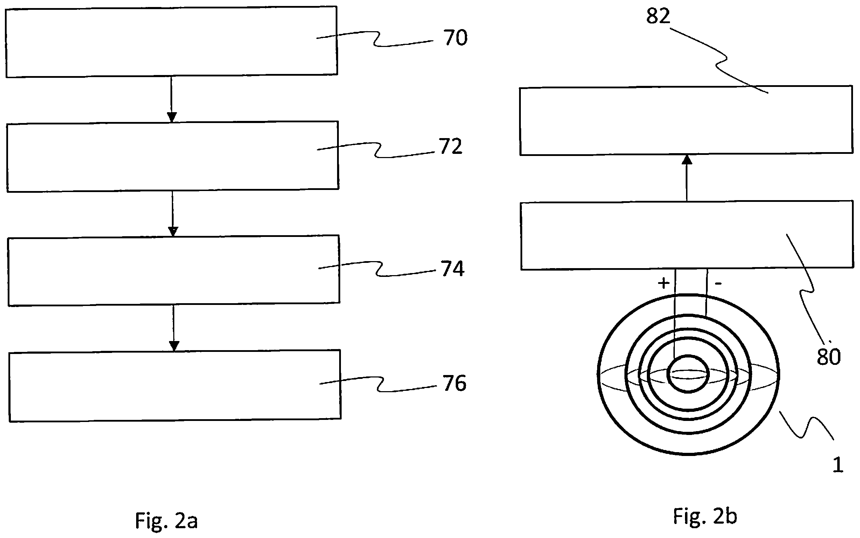

Fig. 2a schematically shows steps of a method for manufacturing a battery according to the present invention. Hereby, in a first step 70 a core 2 or a core 2 with a coating 21 is provided of manufactured. A separator 4 is arranged around said core 2 respectively around said coated core 2 in a further step 72. In further step 74 shell 6 or shell 6 coated with a cathode layer 61 is provided or manufactured. Said shell 6 or coated shell 61 is arranged around separator 4. In a further step 76 a packaging to be arranged around shell 6 respectively around coated shell 61 is manufactured respectively provided.

Thus, there is preferably a slurry anode material coated copper metal in core 2. Separator 4 is preferably placed around this anode layer 21. A preferably slurry cathode material coated aluminium is preferably arranged or formed on top of separator 4. A package 17 is encircling the battery for isolation issues.

Fig. 2b schematically shows spherical battery 1 according to the present invention connected via a control module respectively smart module 80 with a load or system 82. Energy supply from system 82 to battery 1 or from battery 1 to system 82 is preferably controlled by control/smart module 80.

Thus the present invention refers to a battery 1 for storing electric energy. The inventive battery 1 preferably comprises at least a spherical core 2 comprising a first material, a spherical separator 4 surrounding the spherical core 2, and a shell 6 covering the spherical separator 4, wherein the shell 6 comprises a second material different from the first material, wherein at least one first contact terminal 8 extends at least partially shielded from the spherical core 2 through the separator 4 and the shell 6 to the outside and wherein at least one second contact terminal 10 is formed at an outer surface of shell 6 and/or at an outer surface of cathode layer 61.

Thus, the designed battery 1 consists of anode in the core, separator, cathode, electrolyte, and packaging materials. Anode and cathode materials are coated on different kinds of metals. All materials in this structure can be varied according to the application. There is a separator 4 between anode and cathode. All this structure is covered with packaging material. Electrolyte is preferably filled into the battery system at every layer of coating, in particular between separator 4 and the coated anode layer 21.

These type of batteries 1, 3, 18 can be made of Graphite, CNT (carbon nanotube), TiO2, Si, NiSi, Li4,4Si, Li4,4Sn, Li4,4Pb, Li3As, Li3Sb, LiAl, LiC6, Li, etc. in anode and, LiCoO2, LiMnO2, LiFePO4, etc. in cathode.

The power of smart spherical batteries can be increased/changed by being connected each other in cascade or parallel.

## Claims

1. Battery (1) for storing electric energy,
at least comprising
a spherical core (2) comprising a first material,
a spherical separator (4) surrounding the spherical core (2),
and
a shell (6) covering the spherical separator (4),
wherein the shell (6) comprises a second material different from the first material, wherein at least one first contact terminal (8) extends at least partially shielded from the spherical core (2) through the separator (4) and the shell (6) to the outside
and
wherein at least one second contact terminal (10) is formed at an outer surface of the shell (6)
**characterized in that**
the first material is copper and the second material is aluminum,
wherein the spherical copper core is coated with a further material selected from the group of graphite, carbon nanotubes (CNT), TiO₂, Si, NiSi, Li_{4,4}Si, L_{4,4}Sn, Li_{4,4}Pb, Li₃As, Li₃Sb, LiAl, LiC₆ and/or Li.

2. Battery according to claim 1,
**characterized in that**
an electrolyte is provided on one side or on both sides of the separator (4), in particular between the separator (4) and the core (2) and/or between the separator (4) and the shell (6).

3. Battery according to claim 1 or 2,
**characterized in that**
the shell (6) forms an inner surface that forms a spherical shape.

4. Battery according to any of the preceding claims,
**characterized in that**
the surface of the core (2) is coated with a third material different from the first material and/or from the second material for forming an anode layer (21).

5. Battery according to claim 4,
**characterized in that**
the third material comprises a material selected from the group: Graphite, carbon nano tubes (CNT), TiO₂, Si, NiSi, Li_{4,4}Si, Li_{4,4}Sn, Li_{4,4}Pb, Li₃As, Li₃Sb, LiAl, LiC₆ and/or Li.

6. Battery according to any of the preceding claims,
**characterized in that**
the outer surface of the shell (6) is coated with a fourth material different from the first material and/or from the second material for forming a cathode layer (61).

7. Battery according to claim 6,
**characterized in that**
the fourth material comprises a material selected from the group: LiCoO₂, LiMnO₂ and/or LiFePO₄.

8. Battery according to any of the preceding claims,
**characterized in that**
the first contact terminal is at least sectional rigid and forms a holding element for positioning the core (2) in the center of shell (6).

9. Cascade battery system,
at least comprising multiple batteries (1, 3) according to claims 1 to 8,
wherein said batteries (1) are interconnected in such a manner that one first contact terminal (8) of a first battery (1) is connected with a second contact terminal (10) of a second battery (3),
wherein each battery (1, 3) has at least one first contact terminal (8) and one second contact terminal (10).

10. Electric device or space craft device, comprising at least one battery (1, 3) according to claims 1 to 9.

11. Electric device or space craft device according to claim 10,
**characterized in that**
a supporting structure is part of the consumer electric device or space craft device for holding the battery (1, 3) or cascade battery system,
wherein the supporting structure forms one or more contacting means for setting up point contacts, line contact/s or area contact with each battery.

12. Electric device or space craft device according to claim 11, **characterized in that**
one battery (1) or multiple batteries (1, 3) can be rotated at least partially in any direction while contacting the supporting structure.

13. Method for producing a battery according to any of claims 1 to 8,
providing a spherical copper core,
coating said spherical copper core with a further material selected from the group of graphite, carbon nano tubes (CNT), TiO₂, Si, NiSi, Li_{4,4}Si, Li_{4,4}Sn, Li_{4,4}Pb, Li₃As, Li₃Sb, LiAl, LiC₆ and/or Li,
forming a separator around the coated core,
filling the space between the separator and the coated core with a liquid electrolyte material, forming a spherical aluminum shell around the separator,
coating said shell with a material selected form the group of LiCoO₂, LiMnO₂ and/or LiFePO₄.

## Patentansprüche

1. Akkumulator (1) zum Speichern elektrischer Energie,
mindestens aufweisend
einen sphärischen Kern (2), der einen ersten Werkstoff aufweist,
einen sphärischen Separator (4), der den sphärischen Kern (2) umgibt, und
eine Schale (6), die den sphärischen Separator (4) abdeckt,
wobei die Schale (6) einen zweiten Werkstoff aufweist, der sich von dem ersten Werkstoff unterscheidet, wobei sich mindestens eine erste Kontaktklemme (8) von dem sphärischen Kern (2) mindestens teilweise abgeschirmt durch den Separator (4) und die Schale (6) nach außen erstreckt,
und
wobei mindestens eine zweite Kontaktklemme (10) an der Außenoberfläche der Schale (6) ausgebildet ist,
**dadurch gekennzeichnet, dass**
der erste Werkstoff Kupfer und der zweite Werkstoff Aluminium ist,
wobei der sphärische Kupferkern mit einem weiteren Werkstoff beschichtet ist, der aus der Gruppe aus Graphit, Kohlenstoffnanoröhren (CNT), TiO₂, Si, NiSi, Li_{4,4}Si, Li_{4,4}Sn, Li_{4,4}Pb, Li₃As, Li₃Sb, LiAl, LiC₆ und/oder Li ausgewählt ist.

2. Akkumulator gemäß Anspruch 1,
**dadurch gekennzeichnet, dass**
ein Elektrolyt auf einer Seite oder auf beiden Seiten des Separators (4), insbesondere zwischen dem Separator (4) und dem Kern (2) und/oder zwischen dem Separator (4) und der Schale (6) vorgesehen ist.

3. Akkumulator gemäß Anspruch 1 oder 2,
**dadurch gekennzeichnet, dass**
die Schale (6) eine Innenoberfläche ausbildet, die eine sphärische Form bildet.

4. Akkumulator gemäß einem der vorhergehenden Ansprüche,
**dadurch gekennzeichnet, dass**
die Oberfläche des Kerns (2) mit einem dritten Werkstoff beschichtet ist, der sich von dem ersten Werkstoff und/oder von dem zweiten Werkstoff unterscheidet, um eine Anodenschicht (21) auszubilden.

5. Akkumulator gemäß Anspruch 4,
**dadurch gekennzeichnet, dass**
der dritte Werkstoff einen Werkstoff umfasst, der aus der folgenden Gruppe ausgewählt ist: Graphit, Kohlenstoffnanoröhren (CNT), TiO₂, Si, NiSi, Li_{4,4}Si, Li_{4,4}Sn, Li_{4,4}Pb, Li₃As, Li₃Sb, LiAl, LiC₆ und/oder Li.

6. Akkumulator gemäß einem der vorhergehenden Ansprüche,
**dadurch gekennzeichnet, dass**
die Außenoberfläche der Schale (6) mit einem vierten Werkstoff beschichtet ist, der sich von dem ersten Werkstoff und/oder von dem zweiten Werkstoff unterscheidet, um eine Kathodenschicht (61) auszubilden.

7. Akkumulator gemäß Anspruch 6,
**dadurch gekennzeichnet, dass**
der vierte Werkstoff einen Werkstoff aufweist, der aus der folgenden Gruppe ausgewählt ist: LiCoO₂, LiMnO₂ und/oder LiFePO₄.

8. Akkumulator gemäß einem der vorhergehenden Ansprüche,
**dadurch gekennzeichnet, dass**
die erste Kontaktklemme mindestens abschnittsweise steif ist und ein Halteelement ausbildet, um den Kern (2) in der Mitte der Schale (6) anzuordnen.

9. Kaskaden-Akkumulatorsystem,
mindestens aufweisend mehrere Akkumulatoren (1, 3) gemäß den Ansprüchen 1 bis 8,
wobei die Akkumulatoren (1) in einer solchen Weise miteinander verbunden sind, dass eine erste Kontaktklemme (8) eines ersten Akkumulators (1) mit einer zweiten Kontaktklemme (10) eines zweiten Akkumulators (3) verbunden ist,
wobei jeder Akkumulator (1, 3) mindestens eine erste Kontaktklemme (8) und ein zweite Kontaktklemme (10) hat.

10. Elektrisches Gerät oder Raumfahrzeugvorrichtung, aufweisend mindestens einen Akkumulator (1, 3) gemäß den Ansprüchen 1 bis 9.

11. Elektrisches Gerät oder Raumfahrzeugvorrichtung gemäß Anspruch 10,
**dadurch gekennzeichnet, dass**
eine Stützstruktur ein Teil des elektrischen Verbrauchergeräts oder der Raumfahrzeugvorrichtung ist zum Halten des Akkumulators (1, 3) oder des Kaskaden-Akkumulatorsystems,
wobei die Stützstruktur eines oder mehrere Kontaktmittel ausbildet, um punktförmige Kontakte, einen linienförmigen Kontakt bzw. linienförmige Kontakte oder einen flächigen Kontakt mit dem jeweiligen Akkumulator einzurichten.

12. Elektrisches Gerät oder Raumfahrzeugvorrichtung gemäß Anspruch 11,
**dadurch gekennzeichnet, dass**
ein Akkumulator (1) oder mehrere Akkumulatoren (1, 3) mindestens teilweise in einer beliebigen Richtung gedreht werden können, während sie mit der Stützstruktur in Kontakt sind.

13. Verfahren zum Herstellen eines Akkumulators gemäß einem der Ansprüche 1 bis 8,
Vorsehen eines sphärischen Kupferkerns,
Beschichten des sphärischen Kupferkerns mit einem weiteren Werkstoff, der aus der Gruppe aus Graphit, Kohlenstoffnanoröhren (CNT), TiO₂, Si, NiSi, Li_{4,4}Si, Li_{4,4}Sn, Li_{4,4}Pb, Li₃As, Li₃Sb, LiAl, LiC₆ und/oder Li ausgewählt ist,
Ausbilden eines Separators um den beschichteten Kern herum,
Ausfüllen des Raums zwischen dem Separator und dem beschichteten Kern mit einem flüssigen Elektrolytmaterial,
Ausbilden einer sphärischen Aluminium-Schale um den Separator herum, und
Beschichten der Schale mit einem Werkstoff, der aus der Gruppe aus LiCoO₂, LiMnO₂ und/oder LiFePO₄ ausgewählt ist.

## Revendications

1. Batterie (1) de stockage d'énergie électrique, comprenant au moins
un noyau sphérique (2) comprenant un premier matériau,
un séparateur sphérique (4) entourant le noyau sphérique (2),
et
une enveloppe (6) couvrant le séparateur sphérique (4),
dans laquelle l'enveloppe (6) comprend un deuxième matériau différent du premier matériau, dans laquelle au moins une première borne de contact (8) s'étend au moins partiellement blindée vis-à-vis du noyau sphérique (2) à travers le séparateur (4) et l'enveloppe (6) vers l'extérieur et
dans laquelle au moins une seconde borne de contact (10) est formée au niveau d'une surface externe de l'enveloppe (6)
**caractérisée en ce que**
le premier matériau est du cuivre et le deuxième matériau est de l'aluminium,
dans laquelle le noyau sphérique de cuivre est revêtu d'un matériau supplémentaire choisi dans le groupe du graphite, des nanotubes de carbone (CNT), TiO₂, Si, NiSi, Li_{4,4}Si, Li_{4,4}Sn, Li_{4,4}Pb, Li₃As, Li₃Sb, LiAl, LiC₆ et/ou Li.

2. Batterie selon la revendication 1,
**caractérisée en ce que**
un électrolyte est ménagé sur un côté ou sur les deux côtés du séparateur (4), en particulier entre le séparateur (4) et le noyau (2) et/ou entre le séparateur (4) et l'enveloppe (6).

3. Batterie selon la revendication 1 ou 2,
**caractérisée en ce que**
l'enveloppe (6) forme une surface interne qui forme une forme sphérique.

4. Batterie selon l'une quelconque des revendications précédentes,
**caractérisée en ce que**
la surface du noyau (2) est revêtue d'un troisième matériau différent du premier matériau et/ou du deuxième matériau pour former une couche d'anode (21).

5. Batterie selon la revendication 4,
**caractérisée en ce que**
le troisième matériau comprend un matériau choisi dans le groupe : graphite, nanotubes de carbone (CNT), TiO₂, Si, NiSi, Li_{4,4}Si, Li4,4Sn, Li4,4Pb, Li₃As, Li₃Sb, LiAl, LiC₆ et/ou Li.

6. Batterie selon l'une quelconque des revendications précédentes,
**caractérisée en ce que**
la surface externe de l'enveloppe (6) est revêtue d'un quatrième matériau différent du premier matériau et/ou du deuxième matériau pour former une couche de cathode (61).

7. Batterie selon la revendication 6,
**caractérisée en ce que**
le quatrième matériau comprend un matériau choisi dans le groupe : LiCoO₂, LiMnO₂ et/ou LiFePO₄.

8. Batterie selon l'une quelconque des revendications précédentes,
**caractérisée en ce que**
la première borne de contact est au moins rigide en coupe et forme un élément de maintien destiné à positionner le noyau (2) au centre de l'enveloppe (6).

9. Système de batteries en cascade,
comprenant au moins de multiples batteries (1, 3) selon les revendications 1 à 8,
dans lequel lesdites batteries (1) sont interconnectées de telle manière qu'une première borne de contact (8) d'une première batterie (1) est connectée à une deuxième borne de contact (10) d'une deuxième batterie (3),
dans lequel chaque batterie (1, 3) comporte au moins une première borne de contact (8) et une deuxième borne de contact (10).

10. Dispositif électrique ou dispositif d'engin spatial, comprenant au moins une batterie (1, 3) selon les revendications 1 à 9.

11. Dispositif électrique ou dispositif d'engin spatial selon la revendication 10,
**caractérisé en ce que**
une structure de support fait partie du dispositif électrique consommateur ou dispositif d'engin spatial destiné à maintenir la batterie (1, 3) ou le système de batteries en cascade,
dans lequel la structure de support forme un ou plusieurs moyens de contact destinés à établir des points de contact, une ou des contact/s linéaire/s ou contact surfacique avec chaque batterie.

12. Dispositif électrique ou dispositif d'engin spatial selon la revendication 11,
**caractérisé en ce que**
une batterie (1) ou de multiples batteries (1, 3) peuvent être tournées au moins partiellement dans une direction quelconque tout en étant en contact avec la structure de support.

13. Procédé de production d'une batterie selon l'une quelconque des revendications 1 à 8,
la fourniture d'un noyau sphérique de cuivre,
le revêtement dudit noyau sphérique de cuivre avec un matériau supplémentaire choisi dans le groupe du graphite, des nanotubes de carbone (CNT), TiO₂, Si, NiSi, Li_{4,4}Si, Li_{4,4}Sn, Li_{4,4}Pb, Li₃As, Li₃Sb, LiAl, LiC₆ et/ou Li,
la formation d'un séparateur autour du noyau revêtu,
le remplissage de l'espace entre le séparateur et le noyau revêtu avec un matériau d'électrolyte liquide,
la formation d'une enveloppe d'aluminium sphérique autour du séparateur,
le revêtement de ladite enveloppe avec un matériau choisi dans le groupe du LiCoO₂, du LiMnO₂ et/ou du LiFePO₄.
